# EUROPEAN PATENT APPLICATION

(11) **EP 0 896 916 A2**
(43) Date of publication of application: **17.02.1999**
(21) Application number: 98306221.7
(22) Date of filing: 04.08.1998
(51) Int. Cl.: B62B 7/04

(54) **Wheel shaft mounting for a child transporter**

(30) Priority: 12.08.1997 GB 9716928
(71) Applicant: BRITAX-TEUTONIA Kinderwagenfabrik GmbH, D-32112 Hiddenhausen (DE)
(72) Inventor: Maxisch, Peter, 33106 Paderborn (DE)
(74) Representative: Hollinghurst, Antony

(57) **Abstract**

A joint for connecting an axle of a pram or pushchair to a frame members (14) comprises a rigid projection (44) extending radially from the axle (20), a bracket (50) having a hole (54) for receiving the axle (20) and a slot (56) extending radially from said hole (54) for allowing passage of said projection when the bracket (50) is in a first orientation. After assembly, the bracket (50) is secured in a second orientation in which the rigid projection (44) cannot pass through the slot (56).

## Description

This invention relates to a child transporter, such as a pram or pushchair, of the type having a chassis including a rectangular frame comprising a pair of transverse axles interconnected by other frame members.

Hitherto, the chassis of a child transporters of this type has been constructed by welding the axles to such other frame members. The present invention aims to provide an alternative method of construction which facilitates the use of standard components in the assembly of the chassis of different child transporters.

According to the invention, a child's transporter chassis of the type described above has a joint connecting an axle to a frame member comprising a rigid projection extending radially from the axle, a bracket having a hole for receiving the axle and a slot extending radially from said hole for allowing passage of said projection when the bracket is in a first orientation, means for retaining the bracket in a second orientation in which passage of said projection is prevented, and clamping means for securing the bracket to the frame member.

In one form of the invention, the means for retaining the bracket in said second orientation comprises a second bracket having a hole for receiving the axle, an interlocking formation on the axle arranged to engage with complimentary formations on the first bracket for preventing relative angular movement on said axle and locking formations arranged to engage with the radial projection on the axle.

Preferably, the second bracket is operative to clamp the first bracket on to the frame member.

In another form of the invention, the axle has two frame members connected thereto by joints in accordance with the invention, the two frame members being interconnected so as to prevent angular movement relative to each other about the axle and the angular movement of the bracket of one joint between its first and second orientations being in the opposite sense to that of the other joint and both brackets having means for limiting angular movement relative to the axle beyond the range between said first and second orientations, whereby, when assembled together, both brackets are held in their respective second orientations.

An embodiment of the invention will now be described, by way of example, with reference to the accompanying drawings, in which:
Figure 1 is a perspective view of a pram having a chassis in accordance with the invention;
Figure 2 is a perspective view on an enlarged scale of one corner of the chassis shown in Figure 1, with the brackets removed;
Figure 3 is an elevational view of the main bracket of the joint at the corner of the chassis illustrated in Figure 1, with the axle in an intermediate state of insertion;
Figure 4 is an elevational view, similar to Figure 3 showing the axle fully inserted;
Figure 5 is a perspective view, of the second bracket of the joint shown in Figure 1, from the side thereof which abuts against the side of the first bracket shown in Figures 3 and 4;
Figure 6 is a cross-sectional view taken on the line 6-6 in Figure 5, showing the two brackets in the course of being assembled together, and
Figure 7 is a cross-sectional view, similar to Figure 6, showing the joint fully assembled.

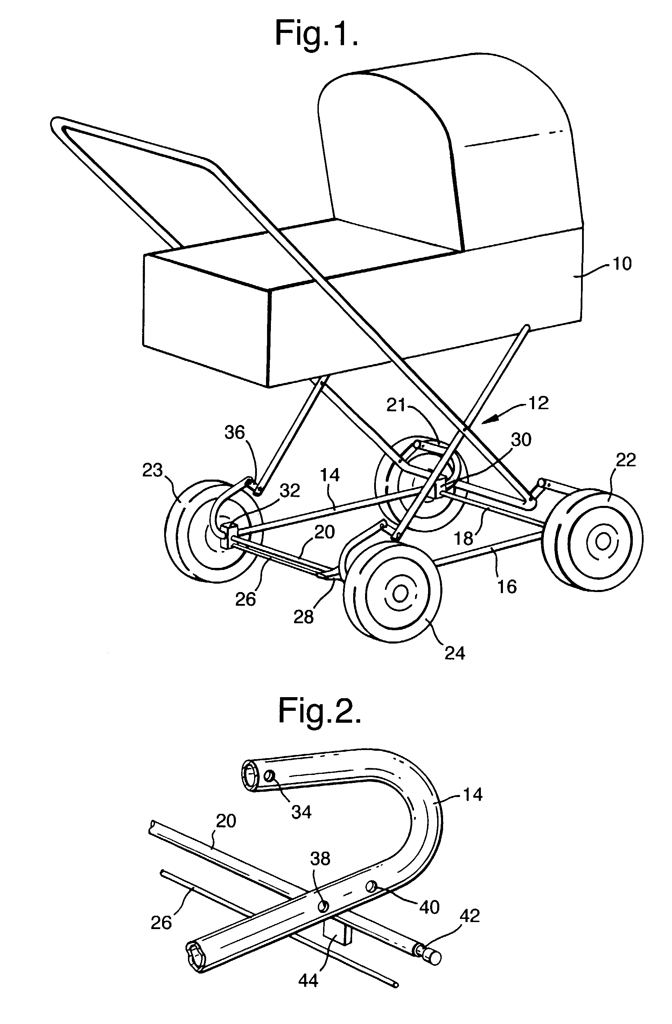

Figure 1 shows a pram having a body 10 mounted on a chassis having a conventional X-frame assembly 12 mounted on a sub-frame comprising a pair of tubular longitudinal members 14 and 16 interconnected by front and rear axles 18 and 20 carrying respective pairs of front wheels 21 and 22 and rear wheels 23 and 24.

Associated with the rear axle 20 is a brake mechanism comprising a laterally moving brake rod 26 which is movable into and out of engagement with radial ribs (not shown) on the inwardly facing side of the rear wheel 23, a corresponding operating rod (not shown) which engages with radial ribs on the other rear wheel 24, and an operating lever 28. A brake mechanism of this type is disclosed in Research Disclosure No. 37323 (May 1995) published by Kenneth Mason Publications Limited. This brake mechanism does not form part of the present invention and will not be described in further detail.

The longitudinal member 14 is connected to the rear axle 20 by a joint 32 and to the front axle 18 by a similar joint 30. Corresponding joints (not shown) connect the other longitudinal member 16 to the axles 18 and 20 respectively.

Figure 2 shows the relative locations of the longitudinal member 14 and the rear axle 20 with the joint 32 removed. The upturned end of the member 14 has a hole 34 for pivotal connection to a link 36 (Figure 1), by which it is attached to the X-frame assembly 12, and two holes 38 and 40 which extend through the member 14 above the rear axle 20. The rear axle 20 has a groove 42 on its outer end for engagement by the wheel 23 in a conventional manner. A downwardly extending flange 44 is welded to the axle 20 directly below the frame member 14, the brake rod 26 extending below the flange 44.

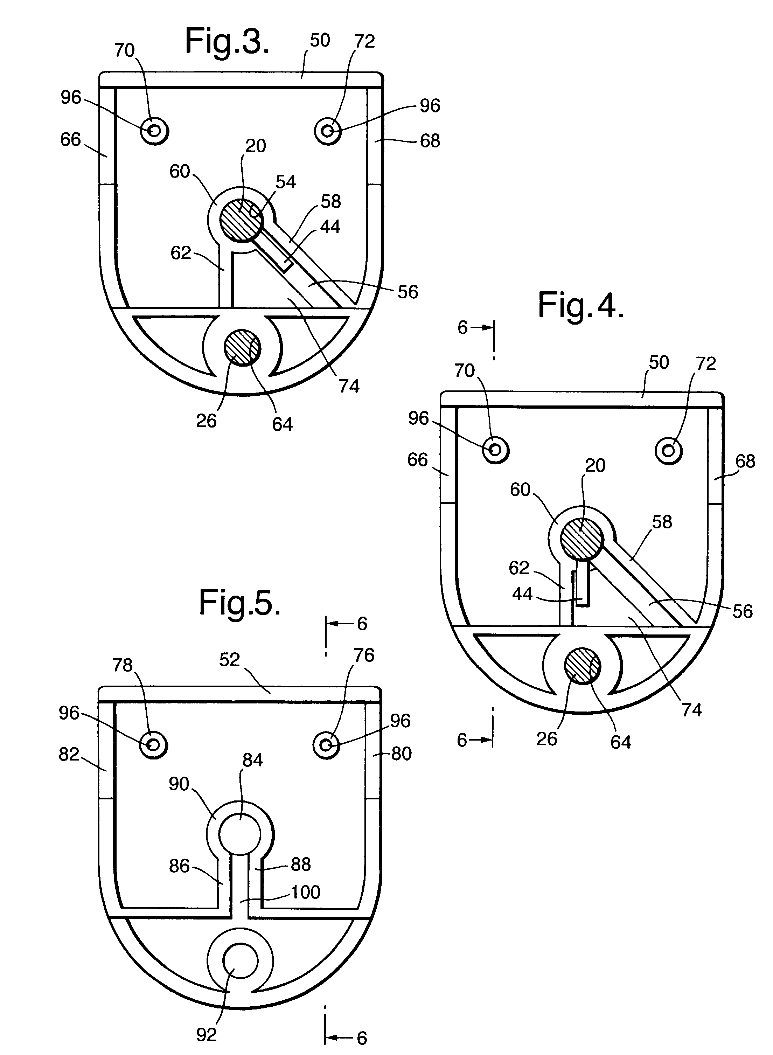

Referring to Figures 3 to 7, the joint 32 comprises first and second moulded plastics brackets 50 and 52 which interlock together to enclose the holes 38 and 40 and the flange 44. As can be seen in Figure 3, the first bracket 50 has a central hole 54 for receiving the axle 20 with a lateral slot 56 to allow passage of the flange 44. A radial rib 58 bounds the upper side of the slot 56 and is connected by an arcuate rib 60 which surrounds the upper part of the hole 54 to a second radial rib 62 which extends downwardly from the hole 54. A hole 64 for accommodating the brake rod 26 is formed below the bottom of the second radial rib 62. Above the hole 54, the case 50 has arcuate cut-away portions 66 and 68 in its side walls for receiving the tubular frame member 14, together with projecting bosses 70 and 72 for engaging in the holes 38 and 40 respectively.

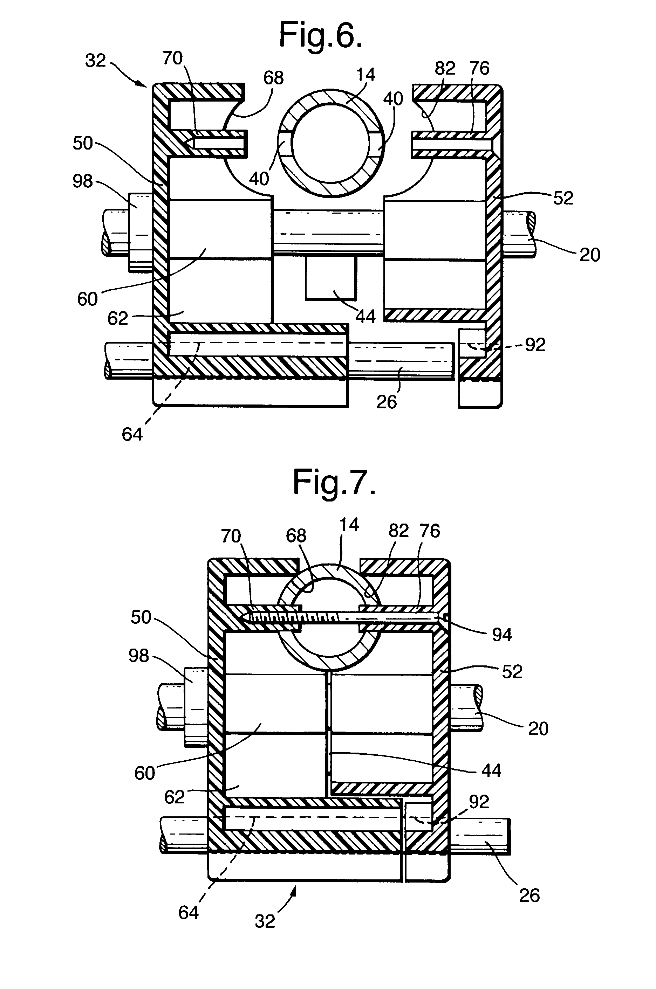

After the flange 44 has been inserted through the slot 56, the axle 20 is turned clockwise relative to the first bracket 50 (as viewed in Figure 3) so that the flange 44 abuts against the rib 62 and the adjacent part 74 of the outer wall of the bracket 50. Next, with the tubular member 14 positioned as shown in Figure 6, the two brackets 50 and 52 are brought together.

As can be seen in Figure 5, the second bracket 52 has two studs 76 and 78, similar to the studs 70 and 72, for engagement in the holes 38 and 40 in the tubular member 14. The side wall of the second bracket 52 also has arcuate portions 80 and 82, similar to the arcuate portions 66 and 68, as can be seen in Figure 6. The axle 20 projects through a central hole 84, the flange 44 engaging between radial ribs 86 and 88 which extend downwardly from an arcuate rib 90 surrounding the hole 84. A hole 92, similar to the hole 64, is provided for the brake rod 26.

After assembly, the two brackets 50 and 52 are held together by a pair of screws 94 which extend through holes 96 in the bosses 70, 72, 76 and 78 respectively, as shown in Figure 7.

The joint 30 connecting the front end of the frame member 14 to the front axle 18 and the two joints (not shown) connecting the axles 18 and 20 to the other frame member 16 are identical with the joint 32. A boss 98 on the outside of the bracket 50 of the joint between the frame member 16 and the rear axle 20 serves as a pivot bearing for the brake lever 28.

When assembled, the flange 44 is firmly trapped between the radial rib 62 and the adjacent outer wall 74 of the first bracket 50 on the one hand and the radial rib 86 and the portion 100 of the outer wall of the second bracket 52 which is located between the ribs 86 and 88. This provides a rigid connection between the respective axle and frame member in conjunction with the studs 70, 72, 76 and 78.

In an alternative embodiment, the second bracket 52 does not have radial ribs 86 and 88. After assembly, angular movement of the axle 20 about its axis in the clockwise direction, as viewed in Figure 4, is prevented by abutment of the flange 44 against the radial rib 62. The first bracket 50 of the joint connecting the axle 20 to the frame member 16 is, of course, fitted onto the axle 20 the other way round. Consequently its radial rib 62 prevents angular movement in the counter-clockwise direction by abutment with the flange 44 at the other end of the axle 20.

## Claims

1. A child transporter having a chassis including a rectangular frame comprising a pair of transverse axles (18, 20) interconnected by other frame members (14, 16), characterised in that a joint connecting one of said axles (20) to a frame member (14) comprises a rigid projection (44) extending radially from the axle (20), a bracket (50) having a hole (54) for receiving the axle (20) and a slot (56) extending radially from said hole (54) for allowing passage of said projection when the bracket (50) is in a first orientation, means (26) for retaining the bracket (50) in a second orientation in which passage of said projection is prevented, and clamping means (68, 82) for securing the bracket (50) to the frame member.

2. A child transporter according to claim 1, wherein the means for retaining the bracket (50) in said second orientation comprises a second bracket (52) having a hole (84) for receiving the axle (20), an interlocking formation on the axle (20) arranged to engage with complimentary formations on said second bracket (52) for preventing relative angular movement thereof relative to said axle (20) and means for rigidly connection the second bracket (52) to the first bracket (50).

3. A child transporter according to claim 2, wherein the interlocking formation on the axle is said rigid radial projection (44).

4. A child transporter according to claim 2 or 3, wherein the interlocking formation on the axle (20) is arranged to prevent axial movement of the axle (20) relative to the brackets when the first bracket (50) is in said second orientation and the second bracket (52) is secured thereto.

5. A child transporter according to claim 2, 3 or 4, wherein the second bracket (52) is operative to clamp the first bracket (50) on to the frame member (14).

6. A child transporter according to any preceding claim, wherein the axle (20) has two frame members (14, 16) connected thereto by joints in accordance with the invention, the two frame members (14, 16) being interconnected so as to prevent angular movement relative to each other about the axle (20) and the angular movement of the bracket (50) of one joint between its first and second orientations being in the opposite direction to that of the other joint and both brackets (50) having means (58, 62) for limiting angular movement relative to the axle (20) beyond the range between said first and second orientations, whereby, when assembled together, both brackets are held in their respective second orientations.
